# EUROPEAN PATENT SPECIFICATION

(11) **EP 0 429 137 B1**
(45) Date of publication and mention of the grant of the patent: **22.03.1995**
(21) Application number: 90203043.6
(22) Date of filing: 16.11.1990
(51) Int. Cl.: B09B 3/00, A62D 3/00, B01D 53/00

(54) **Process for the in-situ removal of pollutants from the soil**
Verfahren zur in-situ-Beseitigung von Boden-Verunreinigungen
Procédé pour éliminer in situ des éléments polluants du sol

(30) Priority: 21.11.1989 NL 8902879
(43) Date of publication of application: 29.05.1991
(73) Proprietor: DSM N.V., 6411 TE Heerlen (NL)
(72) Inventor: Breukelman, Johannes, NL-6191 JD Beek (L.) (NL)

(56) References cited:
- DE-A- 3 601 490
- DE-A- 3 739 126
- DE-A- 3 815 164
- GB-A- 2 098 644
- US-A- 4 593 760
- US-A- 4 765 902
- CHEMIE INGENIEUR TECHNIK, vol. 59, no. 6, 1987, pages 457-464, VCHVerlagsgesellschaft mbH, Weinheim, DE; W.-D. DECKWER et al.: "Technologien zurSanierung von Bodenkontaminationen und Altlasten"
- BWK BRENNSTOFF WÄRME KRAFT, vol. 41, no. 3, March 1989, pages L24-L29,Düsseldorf, DE; D. EITNER: "Biofilter in der Abluftreinigung, Biomassen-Planung-Kosten-Einsatzmöglichkeiten"
- CHEMICAL ENGINEERING, vol. 95, no. 6, 25th April 1988, pages 73-76, New York,US; H. BOHN et al.: "Soil beds weed out air pollutants"
- MILIEUTECHNIEK, no. 1/2, 1989, pages 126,129,131, Oisterwijk, NL; J.J.M.HULLEGIE: "Vluchtige stoffen saneren met vacuüm-extractie en persluchtinjectie"

## Description

The invention relates to a process for the in-situ removal of pollutants from the soil by stripping with a gas wherein
a. the stripping gas is injected into the soil via at least one probe near and/or under the pollutant,
b. the pollutant is volatilized with the stripping gas, so that it rises to ground level,
c. the volatilized pollutant is passed, as it rises, through a biologically active layer.

In particular the invention relates to a process for the in-situ removal of pollutants from the deeper soil, i.e. below the furrow or even deeper.

Such a process is known from DE-A-36,01,490. In said publication a method is described for removing pollutants from the soil by injecting a stripping gas into the polluted soil and sucking it out at the surface. The gas as it rises to the surface of the soil strips and volatilizes the pollutants from the soil. The mixture of stripping gas and volatilized pollutants is then captured under a vacuum bell and transported to a chemosorption installation. In this installation the pollutant is removed from the stripping gas, which gas then can be reused again.

A disadvantage of that process is that the sucked-up contaminated stripping gas must be collected and processed above ground level.

The pollutant remains in the chemosorbing material, which then has to be cleaned or disposed of in a separate step.

The object of the invention is to provide an in-situ clean-up process which is simple and cheap with a relatively short clean-up period.

This object is achieved according to the invention in that the volatilized pollutant is degraded in the biologically active layer, which layer has been preconditioned by upgrading the soil with additives.

Although it is in principle possible to use a biologically active layer already present in the soil at a suitable place. However, it is an advantage for the soil to be upgraded by means of additives to form a preconditioned biologically active layer.

If the upgrading of the soil at or just below ground level to form a biologically active layer is not or hardly possible, a compost layer of a few decimetres' depth can be used, applied on top of the soil.

Using one or more probes, a stripping gas, preferably air, is blown in under pressure under and optionally beside the pollutant. The places for the outlet(s) of the probe(s) are so selected that a maximum amount of the stripping gas moves through the polluted soil to ground level. As the stripping gas is passed through the polluted soil, the pollutant volatilizes, upon which it is carried along to ground level. If the pollutant consists of volatile materials with a sufficiently high vapour pressure (for instance acrylonitrile, benzene, toluene, perchloroethylene, or trichloroethane), such volatilization takes place by evaporation. The pollutant is carried along with the stripping gas in the form of a vapour as the gas passes through the polluted soil. Pollutants can be volatilized also by reacting them with a component of the stripping gas, for instance by an oxidant such as a stripping gas enriched with ozone obtained by ozonization of air. The reaction products formed in the process volatilize as the stripping gas passes through the polluted soil and rises to ground level. Without further measures being taken, there would be an uncontrolled escape of the volatilized pollutant to the atmosphere at ground level. In order to prevent this, the volatilized pollutant is passed, before its escape, through a biologically active layer in which the volatilized pollutant is wholly or partly degraded. This degradation can take place under aerobic conditions, for instance if the pollutant consists of acrylonitrile, benzene or toluene. Anaerobic degradation is possible also and is an advantage with pollutants such as perchloroethylene and trichloroethane.

The great advantage of the process according to the invention is that the injected stripping gas need not be sucked off and be processed at high costs. So the in-situ clean-up process according to the invention is simpler and cheaper, because vacuum extraction with its accompanying expensive installations with activated carbon and possible incinerators can be dispensed with. Also, by applying the process according to the invention a high degree of pollutant disposal can be reached already after a short time. In the process according to the invention a relatively high pressure differential can be maintained between the inflowing and outflowing stripping gas.

According to a preferred embodiment of the process according to the invention, a dry stripping gas is used. In consequence of the injection of dry stripping gas, the soil will become dry and the porosity will increase, so that the resistance against the passage of stripping gas decreases. As the soil dries out, it also holds fewer pollutants and the evaporation will be promoted.

It is possible also to heat the stripping gas. This enhances the effect of the drying of the stripping gas. In case the pollutant is converted locally into volatile components, using for instance an oxidant, the heating of the stripping gas also results in a higher conversion rate and consequently in a shorter clean-up period. By heating the stripping gas, an optimum climate can be achieved in the biologically active layer also in cold weather. With the injection of a dry and/or heated stripping gas, however, more attention must be given to keeping the biologically active layer in good condition. For instance, the temperature in the biologically active layer can be kept at its required level with heated stripping gas and the biologically active layer can be watered as needed for maintaining the required humidity.

The flow pattern of the gas in the soil can be influenced by obstructions, for instance by using water screens. Such a screen may, for instance, consist of an infiltration trench round the pollutant. It is possible also to use airtight covers or seals, existing or yet to be applied on or in the top soil, such as for instance concrete slabs.

The process according to the invention is elucidated by means of the figures and the typical embodiment without, however, being limited hereto.

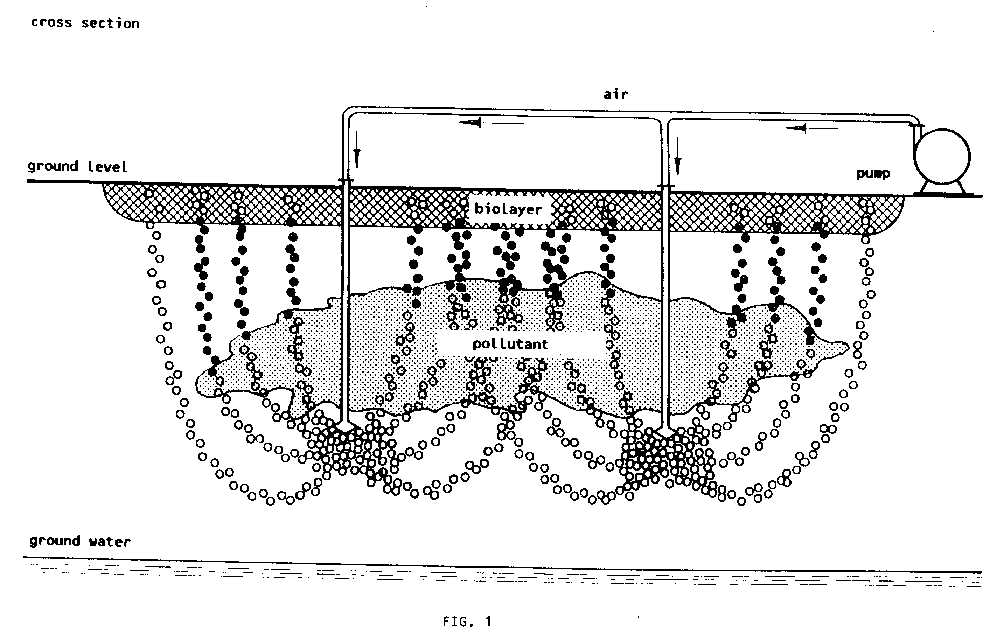

Figure 1 represents a cross section of the soil with a pollutant contained therein. Using a pump and one or more probes a stripping gas is injected into the soil under or beside the pollutant. The stripping gas rises and carries the volatilized pollutant along with it. The volatilized pollutant is subsequently passed through a biologically active layer situated at or just below ground level and totally degraded there.

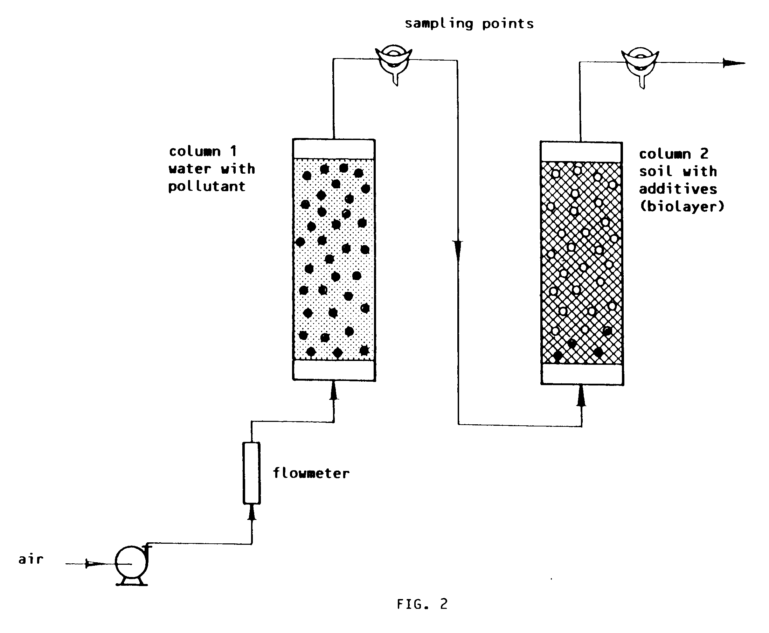

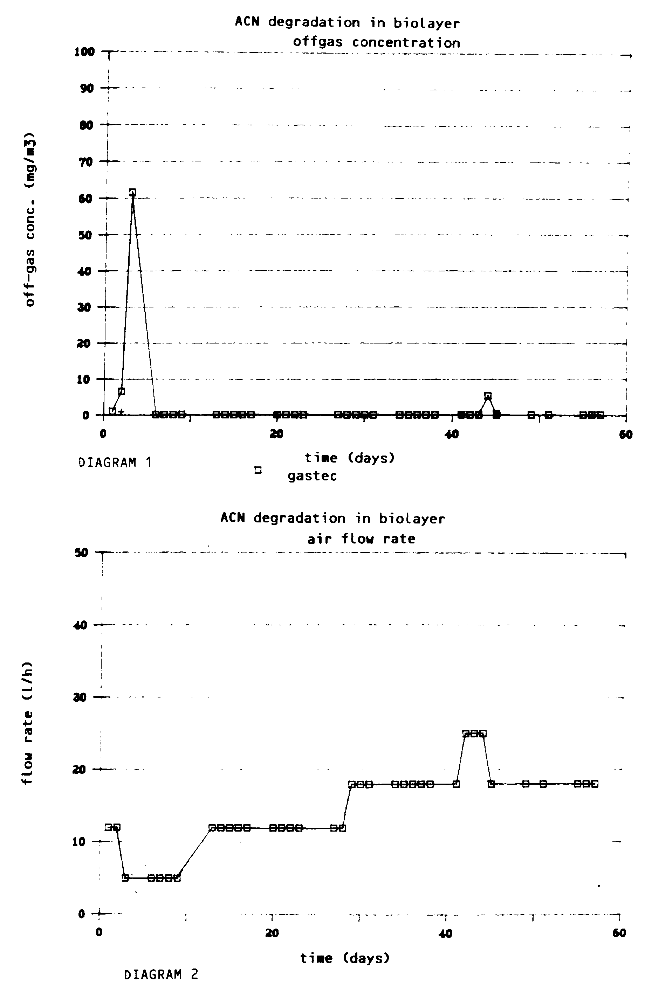

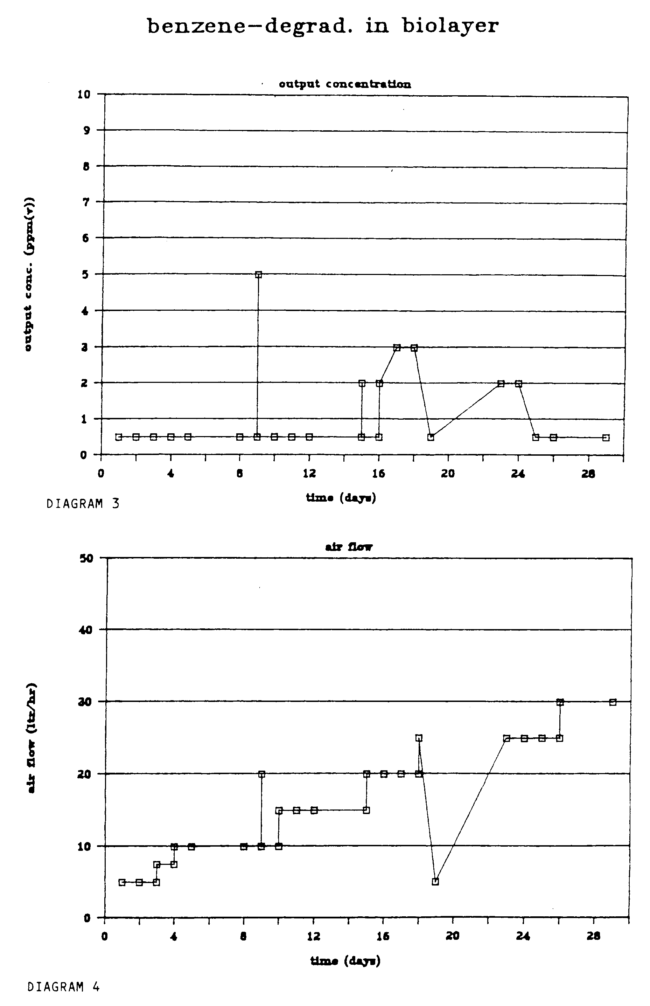

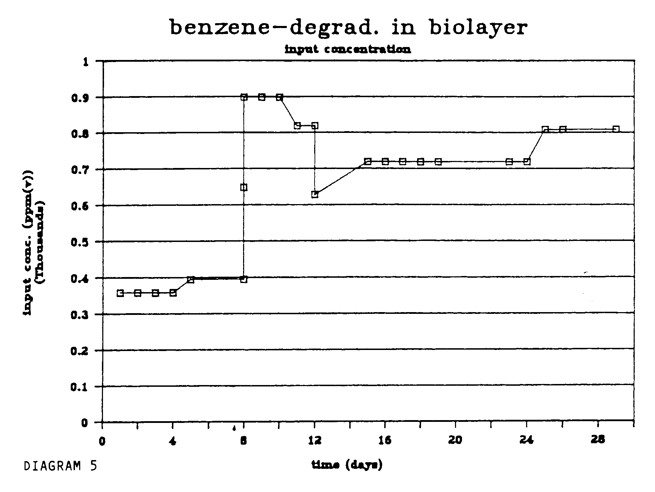

Figure 2 is an experimental arrangement on laboratory scale. Stripping gas is passed by means of a pump via a flow meter through a first column of water with pollutant. The thus contaminated stripping gas is subsequently passed through a second column with a biologically active layer. After both the first and second columns samples can be taken to determine the degree of pollution.

### Example I

The example is performed according to the arrangement represented in figure 2. Column 1 with a cross section of 200 cm² and a liquid level of 60 cm contains 12 litres of water with acrylonitrile (ACN) added to it. On commencement of the experiment the concentration in the water is approx. 200 mg/l.
Through this solution a regulatable amount of air is blown. The air absorbs ACN from the solution and is subsequently passed into the bottom of column 2. Column 2 with a cross section of 314 cm² and a filling height of 60 cm contains 21.5 kg soil provided with additives, for instance fertilizers, compost, structure conditioners, biologically active material and trace elements. With these additives to the soil a biologically active layer is obtained. The air flow through the columns is regulated by means of a flow meter. This flow meter is calibrated to the discharge rate of column 2.

The ACN concentration in the material fed to and discharged from column 2 is analyzed daily using Gastec tubes. In these analyses, Gastec tubes ranging from 0.1-24 ppm (v) were used from day 1 up to and including day 31 and from day 32 up to and including day 57 Gastec tubes were used ranging from 0.1-300 ppm (v). Besides, these analyses were checked gaschromatographically (GC). At regular times the ACN concentration of the water in column 1 was restored to its required level again by addition of ACN.

The progress of the measurements and the results are shown in diagrams 1 and 2. The measuring was started with an air flow rate of 12 l/h. At this moment the biologically active layer is found yet to be insufficiently adapted to the ACN; the concentration upon discharge from column 2 rises quickly. With an air flow rate of 5 l/h, the ACN concentration upon discharge from column 2 subsequently falls to below the detection limit. This remains, even if after 6 and 10 days the flow rate of the air is increased to 12 and 18 l/h respectively. An increase to 25 l/h, however, results in an overloading of the biologically active layer. On the other hand, immediately after the lowering of the air flow rate to 18 l/h, the ACN concentration upon discharge from column 2 falls to below its detection limit again.

On the basis of these measuring data it can be calculated that, with an air load of up to about 20 l/h (0.6 m³/m².h) and ACN concentrations of 600 mg/m³ in the feed, the disposal efficiencies achieved by the biologically active layer are more than 99.9%. In terms of volumes this means a specific conversion rate of at least 600 mg ACN/m³.h. On the basis of the measuring results it can be concluded also that the removal is not connected with the adsorption of the ACN, but the result of biological degradation.

### Example II

Example I was repeated on the understanding that column 1 contained 12 litres of water with benzene added to it instead of ACN. The progress of the measurements and the results are shown in diagrams 3, 4 and 5. The measuring was started with an air flow rate of 5 l/h containing 360 ppm (v) benzene. The benzene concentration upon discharge from column 2 was 0.5 ppm (v). Within 4 days the air flow rate was increased to 10 l/h and the benzene concentration upon discharge from column 2 remained 0.5 ppm (v). After 9 days the air flow rate was increased to 20 l/h and the benzene concentration was also increased to 900 ppm (v). This, however, resulted in an overloading of the biologically active layer. On the other hand, immediately after the lowering of the air flow rate to 10 l/h, the benzene concentration upon discharge from column 2 fell back to 0.5 ppm (v). After 14 days the air flow rate was increased to 15 l/h with a benzene concentration of 625 ppm (v). The benzene concentration upon discharge from column 2 remained 0.5 ppm (v). After 16 days the air flow rate was further increased to 20 l/h containing 715 ppm (v) benzene. This resulted in an increase of the benzene concentration upon discharge to 2 ppm (v). A further increase of the air flow rate to 25 l/h resulted again in an overloading of the biologically active layer as the benzene concentration upon discharge increased further to 3 ppm (v). However, immediately after the lowering of the air flow rate to 5 l/h, the benzene concentration upon discharge from column 2 fell back again to 0.5 ppm (v). Finally, after 28 days the biologically active layer was adapted thusfar that it could cope sufficiently with an air flow rate of 30 l/h containing 810 ppm (v) benzene. The benzene concentration upon discharge from column 2 remained 0.5 ppm (v).

On the basis of these measuring data it can be calculated that, with an air load of up to about 1 m³/m².h and benzene concentrations of 4200 mg/m³ in the feed, the disposal efficiencies achieved by the biologically active layer are more than 99.9%. It can be concluded also that the removal is not connected with the adsorption of the benzene, but the result of biological degradation.

## Claims

1. Process for the in-situ removal of pollutants from the soil by stripping with a gas, wherein
a. the stripping gas is injected into the soil via at least one probe near and/or under the pollutant,
b. the pollutant is volatilized with the stripping gas, so that it rises to ground level,
c. the volatilized pollutant is passed, as it rises, through a biologically active layer
characterized in that the volatilized pollutant is degraded in the biologically active layer, which layer has been preconditioned by upgrading the soil with additives.

2. Process according to claim 1, characterized in that as the stripping gas air or ozonized air is injected.

3. Process according to any one of claims 1-2, characterized in that a plurality of probes are placed in the soil under and/or beside the pollutant.

4. Process according to any one of claims 1-3, characterized in that a dry stripping gas is injected.

5. Process according to any one of claims 1-4, characterized in that a heated stripping gas is injected.

6. Process according to any one of claims 1-5, characterized in that the flow pattern of the stripping gas is influenced by one or more obstructions.

7. Process according to claim 6, characterized in that the flow pattern of the stripping gas is influenced by one or more water screens round the pollutant.

8. Process according to claim 6, characterized in that the flow pattern of the stripping gas is influenced by an airtight cover or seal applied on or in the top soil.

9. Process according to any one of claims 1-8, characterized in that a biologically active layer, preferably compost, is applied on the soil.

## Patentansprüche

1. Verfahren zur In-situ-Entfernung von Verunreinigungen aus dem Boden durch Gas-Strippen, wobei
a. das Stripp-Gas über mindestens eine Sonde nahe und/oder unter der Verunreinigung in den Boden eingeleitet wird,
b. die Verunreinigung mit dem Stripp-Gas verflüchtigt wird, so daß sie zum Bodenniveau aufsteigt,
c. die verflüchtigte Verunreinigung beim Aufsteigen durch eine biologisch aktive Schicht hindurchgeleitet wird,
dadurch gekennzeichnet, daß die verflüchtigte Verunreinigung in der biologisch aktiven Schicht abgebaut wird, welche Schicht durch Verbesserung des Bodens mit Zusatzstoffen vorbereitet worden ist.

2. Verfahren nach Anspruch 1, dadurch gekennzeichnet, daß als Stripp-Gas Luft oder mit Ozon behandelte Luft eingeleitet wird.

3. Verfahren nach einem der Ansprüche 1-2, dadurch gekennzeichnet, daß eine Mehrzahl von Sonden unter und/oder neben der Verunreinigung im Boden placiert wird.

4. Verfahren nach einem der Ansprüche 1-3, dadurch gekennzeichnet, daß ein trockenes Stripp-Gas eingeleitet wird.

5. Verfahren nach einem der Ansprüche 1-4, dadurch gekennzeichnet, daß ein erwärmtes Stripp-Gas eingeleitet wird.

6. Verfahren nach einem der Ansprüche 1-5, dadurch gekennzeichnet, daß das Strömungsmuster des Stripp-Gases durch ein oder mehrere Hindernisse beeinflußt wird.

7. Verfahren nach Anspruch 6, dadurch gekennzeichnet, daß das Strömungsmuster des Stripp-Gases durch ein oder mehrere Wasserschirme um den Verschmutzungsstoff herum beeinflußt wird.

8. Verfahren nach Anspruch 6, dadurch gekennzeichnet, daß das Strömungsmuster des Stripp-Gases durch eine luftdichte Abdeckung oder Abdichtung, die oben auf oder in der obersten Bodenschicht angebracht wird, beeinflußt wird.

9. Verfahren nach einem der Ansprüche 1-8, dadurch gekennzeichnet, daß eine biologisch aktive Schicht, vorzugsweise Kompost, auf den Boden aufgebracht wird.

## Revendications

1. Procédé pour éliminer in situ des éléments polluants du sol, par décapage avec un gaz, dans lequel
a.le gaz décapant est injecté dans le sol au moyen d'au moins une sonde près et/ou sous l'élément polluant,
b.l'élément polluant se volatilise avec le gaz décapant de sorte que l'élément polluant monte jusqu'au niveau du sol,
c.l'élément polluant volatilisé, lorsqu'il s'élève, traverse une couche biologiquement active.
caractérisé en ce que l'élément volatilisé est dégradé dans une couche biologiquement active, laquelle couche a été préconditionnée en modifiant le sol au moyen d'additifs.

2. Procédé selon la revendication 1, caractérisé en ce que le gaz décapant injecté est de l'air ou de l'air ozonisé.

3. Procédé selon une des revendications 1 ou 2, caractérisé en ce qu'une pluralité de sondes sont placées dans le sol sous et/ou à côté de l'élément polluant.

4. Procédé selon une des revendications 1 à 3, caractérisé en ce qu'un gaz décapant sec est injecté.

5. Procédé selon une des revendications 1 à 4, caractérisé en ce qu'un gaz décapant chauffé est injecté.

6. Procédé selon une des revendications 1 à 5, caractérisé en ce que le schéma d'écoulement du gaz décapant est influencé par un ou plusieurs obstacles.

7. Procédé selon la revendication 6, caractérisé en ce que le schéma d'écoulement du gaz décapant est influencé par une ou plusieurs barrières d'eau autour de l'élément polluant.

8. Procédé selon la revendication 6, caractérisé en ce que le schéma d'écoulement du gaz décapant est influencé par une plaque ou un obturateur appliqué sur ou dans la couche arable.

9. Procédé selon une des revendications 1 à 8, caractérisé en ce qu'une couche biologiquement active, de préférence du compost, est appliquée sur le sol.
